# EUROPÄISCHE PATENTSCHRIFT

(11) **EP 3 332 157 B1**
(45) Veröffentlichungstag und Bekanntmachung des Hinweises auf die Patenterteilung: **13.03.2019**
(21) Anmeldenummer: 16738197.9
(22) Anmeldetag: 13.07.2016
(51) Int. Cl.: F16K 3/02, F16K 3/18

(54) **VENTIL, VORZUGSWEISE VAKUUMVENTIL**
VALVE, PREFERABLY VACUUM VALVE
VANNE, DE PRÉFÉRENCE VANNE À DÉPRESSION

(30) Priorität: 06.08.2015 AT 5202015
(43) Veröffentlichungstag der Anmeldung: 13.06.2018
(73) Patentinhaber: VAT Holding AG, 9469 Haag (CH)
(72) Erfinder: MAYER, Thomas, 6845 Hohenems (AT)
(74) Vertreter: Fechner, Thomas
(86) Internationale Anmeldenummer: PCT/EP2016/066675
(87) Internationale Veröffentlichungsnummer: WO 2017/021120

(56) Entgegenhaltungen:
- EP-A1- 1 111 280
- WO-A1-2004/102055
- GB-A- 1 440 572
- GB-A- 2 116 680
- JP-A- 2005 106 118
- JP-U- S4 913 429
- JP-U- S62 172 863
- US-A- 929 589
- US-A- 1 462 636
- US-A- 2 152 784

## Beschreibung

Die vorliegende Erfindung betrifft ein Ventil gemäß des Oberbegriffs des Patentanspruchs 1.

Ventile dieser Art und insbesondere auch Vakuumventile sind in zahlreichen Ausgestaltungsformen beim Stand der Technik bekannt. Damit das Verschlussorgan, insbesondere bei der Anwendung im Vakuumbereich, in seiner Schließstellung vollständig abdichtend am Ventilsitz anliegen und an diesen angedrückt werden kann, sollte es optimal zum Ventilsitz ausgerichtet sein. In der Praxis macht es oft Schwierigkeiten dies mit entsprechend geringen Toleranzen sicherzustellen. Die DE 29 51 150 A1 schlägt in diesem Zusammenhang vor, einen Dichtring mit einer der beiden Dichtflächen durch Aufschrumpfen zu verbinden, um so relativ große Ausgleichsbewegungen und Anpassungsbewegungen zuzulassen.

Die JP 2005-106118 A offenbart ein Ventil mit einem plattenförmigen Verschlussorgan, welches von einer Antriebseinheit in einer Schließrichtung in die Schließstellung bewegt werden kann und zusätzlich orthogonal zur Schließrichtung vor den Ventilsitz und von diesem weg verschoben werden kann.

Die GB 2 116 680 A zeigt ebenfalls ein solches Ventil mit einem plattenförmigen Verschlussorgan, wobei das Verschlussorgan über Federzungen und Rollen an einem Gehäuse des Ventils abgestützt und geführt ist.

Aufgabe der Erfindung ist es, eine andere Lösung für das optimale Ausrichten des Verschlussorgans zum Ventilsitz vorzuschlagen.

Die vorliegende Erfindung sieht hierzu ein Ventil gemäß Patentanspruch 1 vor.

Mit anderen Worten wird dem Verschlussorgan durch eine entsprechende verschiebbare Lagerung an dem Trägerkörper der Antriebseinheit ein zusätzlicher Freiheitsgrad der Bewegung in einer Richtung orthogonal oder quer zur Schließrichtung zugestanden. Dies ermöglicht eine exakte Ausrichtung, vorzugsweise Zentrierung, des Verschlussorgans am Ventilsitz, wenn es in die Schließstellung gebracht wird. Hierdurch kann das Verschlussorgan optimal abdichtend an den Ventilsitz angedrückt werden. Eine Richtung orthogonal zur Schließrichtung ist dann gegeben, wenn die Richtung senkrecht auf der Schließrichtung steht. Quer sind all diejenigen Winkel, die von einer orthogonalen Ausrichtung und einer Koaxialität bzw. Parallelität abweichen. Günstigerweise liegen diese Richtungen quer zur Schließrichtung in einem Winkelbereich von +/- 20°, vorzugsweise +/- 10°, um einen rechten Winkel bzw. die orthogonale Richtung auf die Schließrichtung.

Im Falle einer verschiebbaren Lagerung des Verschlussorgans in einer Richtung orthogonal zur Schließrichtung könnte man auch von einer radialen verschiebbaren Lagerung sprechen.

In bevorzugten Ausgestaltungsformen der Erfindung kann es je nach Form des Verschlussorgans und des Ventilsitzes sinnvoll sein, diese verschiebbare Lagerung nicht nur in einer sondern in einer Vielzahl von Richtungen orthogonal oder quer zur Schließrichtung zu ermöglichen. Besonders bevorzugte Ausgestaltungsformen sehen vor, dass das Verschlussorgan zur Ausrichtung des Verschlussorgans beim Andrücken an den Ventilsitz an dem Trägerkörper der Antriebseinheit in einer Ebene orthogonal oder quer zur Schließrichtung in allen Richtungen verschiebbar gelagert ist. Besonders bevorzugt ist das Verschlussorgan also in allen Richtungen radial bezüglich der Schließrichtung verschiebbar am Trägerkörper der Antriebseinheit gelagert.

Das Verschlussorgan kann je nach Anwendungsbereich für das Ventil sehr unterschiedlich ausgestaltet sein. Es kann sich z.B. um einen Ventilstift oder eine Ventilnadel handeln, wie sie insbesondere bei Gasdosierventilen oder dergleichen zum Einsatz kommen. Wenn es sich bei dem erfindungsgemäßen Ventil um ein sogenanntes Transferventil handelt, bei dem größere Bauteile durch die vom Ventilsitz umgebene Ventilöffnung hindurch transportiert werden müssen, kommen größere Verschlussorgane zum Einsatz. Besonders bevorzugte Ausgestaltungsformen der Erfindung sehen vor, dass das Verschlussorgan ein Ventilteller ist. Ein Ventilteller ist ein flächiges plattenförmiges Gebilde, welches dazu vorgesehen ist, die vom Ventilsitz umgebene Ventilöffnung durch entsprechende Anlage bzw. entsprechendes Andrücken an den Ventilsitz, vorzugsweise dichtend, zu verschließen. Besonders bevorzugte Ausgestaltungsformen von Ventiltellern haben eine kreisrunde Außenkontur. Ventilteller können aber auch eine rechteckige oder quadratische, gegebenenfalls mit abgerundeten Ecken versehene Außenkontur aufweisen. Die Ventilsitze weisen jeweils eine daran angepasste Form auf. Der Ventilteller kann aber muss nicht eben ausgebildet sein. Besonders bevorzugte Ausgestaltungsformen sehen jeweils vor, dass die Schließrichtung eine Flächennormale auf eine Schließebene des Ventiltellers bildet. Die Schließebene wird dabei von dem umlaufenden Bereich des Ventiltellers aufgespannt, welcher am Ventilsitz anliegt, wenn der Ventilteller an den Ventilsitz angedrückt ist. Sowohl das Verschlussorgan als auch der Ventilsitz können zumindest eine Dichtung tragen. Es kann also sowohl am Ventilsitz als auch am Verschlussorgan zumindest eine Dichtung fixiert sein.

Um die Ausrichtung des Verschlussorgans beim Andrücken an den Ventilsitz automatisch herbeizuführen, sehen besonders bevorzugte Ausgestaltungsformen der Erfindung vor, dass das Verschlussorgan und/oder der Ventilsitz und/oder zumindest eine in der Schließstellung zwischen dem Verschlussorgan und dem Ventilsitz angeordnete Dichtung zur Ausrichtung des Verschlussorgans beim Andrücken an den Ventilsitz eine sich in Schließrichtung verjüngende Querschnittsfläche aufweist bzw. aufweisen. Es kann sich z.B. um zumindest bereichsweise rotationssymmetrische, sich in Schließrichtung verjüngende Querschnittsflächen handeln. Besonders bevorzugt sind das Verschlussorgan und/oder der Ventilsitz und/oder zumindest die in der Schließstellung zwischen dem Verschlussorgan und dem Ventilsitz angeordnete Dichtung konisch ausgebildet. Man könnte bei der konischen Ausgestaltung auch von einer Kegelstumpffläche oder dergleichen sprechen.

Um die Reibungskräfte beim Verschieben des Verschlussorgans relativ zum Trägerkörper möglichst gering zu halten, sehen bevorzugte Varianten der Erfindung vor, dass das Verschlussorgan unter Zwischenschaltung zumindest eines Gleitlagers am Trägerkörper der Antriebseinheit verschiebbar gelagert ist. Es können hier verschiedenste Gleitlager zum Einsatz kommen. Z.B. kann es sich um eine Schmierschicht, eine Kunststoffbeschichtung z.B. mit Teflon (Polytetrafluorethylen) oder um Gleitelemente wie Bronzebuchsen oder dergleichen handeln. Rollen- oder Kugellager wären auch möglich, sind aber relativ aufwendig und teuer

Um das Verschlussorgan relativ zum Trägerkörper in einer vorgebbaren Neutrallage zu halten, wenn das Verschlussorgan vom Ventilsitz abgehoben ist, sieht die Erfindung vor, dass das Ventil eine Vorspannfeder zum elastischen Vorspannen des Verschlussorgans in Richtung hin zu einer Neutrallage relativ zum Trägerkörper der Antriebseinheit aufweist. Mit dieser Vorspannfeder kann automatisch eine Rückstellung in die Neutrallage erfolgen, wenn das Verschlussorgan vom Ventilsitz abgehoben ist.

Für die am Ventilsitz oder am Verschlussorgan gegebenenfalls angeordnete Dichtung gibt es verschiedenste Ausgestaltungsformen und Möglichkeiten, insbesondere in Form von Dichtringen. Z. B. kann ein solcher Dichtring bzw. eine solche Dichtung ebenfalls eine konische Form aufweisen. Beispiele geeigneter Dichtungen sind ohne Beschränkung der Allgemeinheit in der DE 29 51 150 A1, der DE 44 46 947 A1 aber auch in der US 4,627,599 A gezeigt.

Zur Realisierung der erfindungsgemäßen Verschiebbarkeit des Verschlussorgans relativ zum Trägerkörper der Antriebseinheit in zumindest einer Richtung orthogonal oder quer zur Schließrichtung gibt es verschiedene Möglichkeiten. Besonders bevorzugte Varianten der Erfindung sehen vor, dass der Trägerkörper der Antriebseinheit zumindest einen Aufnahmeraum aufweist und das Verschlussorgan ein mit Spiel in diesem Aufnahmeraum gelagertes Lagerelement aufweist oder dass das Verschlussorgan zumindest einen Aufnahmeraum aufweist und der Trägerkörper der Antriebseinheit ein mit Spiel in diesem Aufnahmeraum gelagertes Lagerelement aufweist. Das Spiel ist dabei bevorzugt in Richtung orthogonal oder quer zur Schließrichtung vorhanden. Der Aufnahmeraum und/oder das Lagerelement ist bzw. sind in diesen Ausgestaltungsformen bevorzugt rotationssymmetrisch ausgeführt, wobei der Aufnahmeraum eben einen größeren Durchmesser bzw. eine größere Querschnittsfläche aufweist, als das Lagerelement, sodass sich das für die Verschiebebewegung benötigte Spiel hieraus ergibt. Besonders bevorzugte Varianten solcher Ausgestaltungsformen erfindungsgemäßer Ventile sehen vor, dass das der Aufnahmeraum und/oder das Lagerelement, in einem Längsschnitt parallel zur Schließrichtung gesehen, T-förmig ausgebildet ist bzw. sind.

Erfindungsgemäße Ventile können dahingehend ausgebildet sein, dass das Verschlussorgan von der Antriebseinheit ausschließlich in Schließrichtung und in der entgegengesetzten Richtung bewegt werden kann. Es sind aber auch Ausgestaltungsformen von erfindungsgemäßen Ventilen möglich, bei denen das Verschlussorgan nicht nur in Schließrichtung und in der dazu entgegengesetzten Richtung sondern auch in dazu abgewinkelten, vorzugsweise orthogonalen, Richtungen bewegt werden kann. Für diese Bewegungen kann aber muss nicht zumindest eine zweite Antriebseinheit vorgesehen sein. Besonders bevorzugt handelt es sich bei erfindungsgemäßen Ventilen um sogenannte L-Ventile. Es ist also in bevorzugten Varianten vorgesehen, dass das Verschlussorgan ausgehend von der abgehobenen Stellung in einer zur Schließrichtung abgewinkelten, vorzugsweise orthogonalen, Richtung, vorzugsweise von zumindest einer zweiten Antriebseinheit, in eine Offnungsstellung bewegbar ist, wobei das Verschlussorgan in der Öffnungsstellung ganz oder zumindest teilweise außer Deckung mit einer vom Ventilsitz umgebenen Ventilöffnung gebracht ist. Während das Verschlussorgan in der abgehobenen Stellung zwar nicht mehr am Ventilsitz anliegt aber noch in Deckung mit der Ventilöffnung angeordnet ist, sieht die Öffnungsstellung vor, dass das Verschlussorgan gar nicht mehr oder zumindest teilweise nicht mehr in Deckung mit der Ventilöffnung ist und diese somit ganz oder teilweise freigibt.

Wie bereits angedeutet, kommen erfindungsgemäße Ventile besonders bevorzugt in der sogenannten Vakuumtechnik zum Einsatz. In der Regel spricht man von Vakuumtechnik, wenn Betriebszustände mit Drücken kleiner oder gleich 0,001 mbar (Millibar) bzw. 0,1 Pascal erreicht werden. Vakuumventile sind Ventile, die für diese Druckbereiche und/oder entsprechende Druckdifferenzen zur Umgebung ausgelegt sind. Man kann von Vakuumventilen aber auch allgemein dann sprechen, wenn sie für Drücke unter dem Normaldruck, also unter 1 bar ausgelegt sind.

Weitere Merkmale und Einzelheiten bevorzugter Ausgestaltungsformen der Erfindung werden anhand eines bevorzugten Ausführungsbeispiels in der Figurenbeschreibung beispielhaft erläutert. Es zeigen:
Fig. 1 eine Außenansicht auf ein erfindungsgemäßes Ventil;
Fig. 2, 3 und 4 das Verschlussorgan in der Öffnungsstellung, der abgehobenen Stellung und der Schließstellung jeweils in einem Längsschnitt entlang der Schnittlinie AA aus Fig. 1;
Fig. 5 einen Längsschnitt durch die Antriebseinheit und das Verschlussorgan;
Fig. 6 eine Seitenansicht hierauf;
Fig. 7 einen Schnitt entlang der Schnittebene EE aus Fig. 7 und
Fig. 8 eine Explosionsdarstellung zu den Bauteilen der Antriebseinheit und des Verschlussorgans.

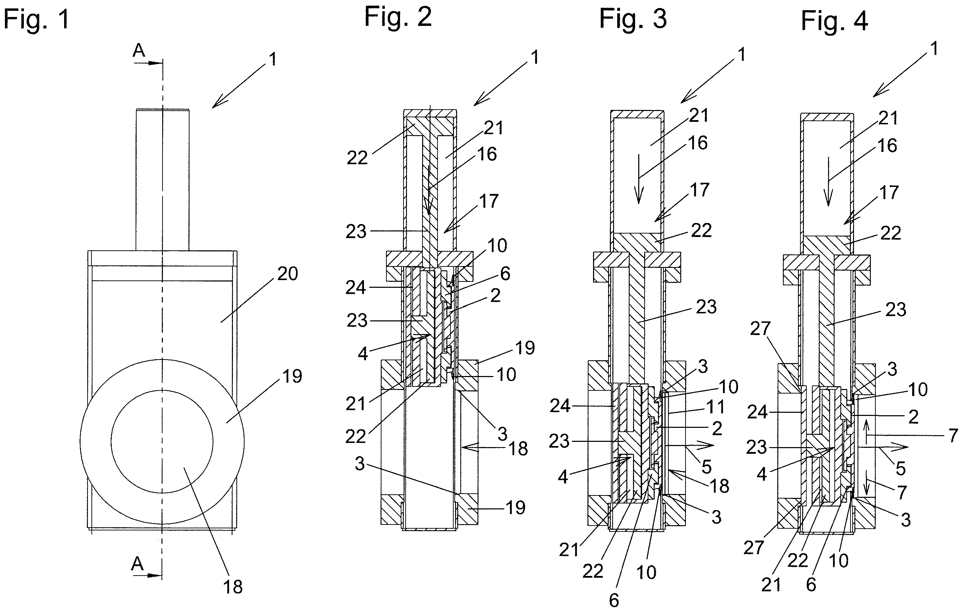

Das in Fig. 1 dargestellte, erfindungsgemäße Ventil 1 weist, wie an sich bekannt, ein Gehäuse 20 und zwei die Ventilöffnung 18 umgebende Flansche 19 auf. Mit diesen Flanschen 19 kann das Ventil 1 an einer entsprechenden Prozesskammer oder Leitung oder dergleichen befestigt werden. Dies ist an sich bekannt und muss nicht weiter erläutert werden.

Die Fig. 2, 3 und 4 zeigen jeweils Längsschnitte entlang der Schnittlinie AA. In Fig. 2 befindet sich das Verschlussorgan 2 des Ventils 1 in der Öffnungsstellung. In dieser Öffnungsstellung ist das Verschlussorgan 2 in diesem Ausführungsbeispiel ganz außer Deckung mit der vom Ventilsitz 3 umgebenen Ventilöffnung 18 gebracht. In der Öffnungsstellung gibt das Verschlussorgan 2 in diesem Ausführungsbeispiel die Ventilöffnung 18 also somit vollständig frei. In Fig. 3 ist die abgehobene Stellung gezeigt, in der das Verschlussorgan 2 im hier gezeigten Ausführungsbeispiel zwar vom Ventilsitz 3 abgehoben ist, aber sich immer noch in Deckung mit der Ventilöffnung 18 befindet. Wird das Verschlussorgan 2 aus dieser Stellung gemäß Fig. 3 heraus nun in Schließrichtung 5 von der Antriebseinheit 4 gegen den Ventilsitz 3 gedrückt, so wird die in Fig. 4 gezeigte Schließstellung erreicht, in der das Verschlussorgan 2 an den Ventilsitz 3 angedrückt ist. Die Bewegung des Verschlussorgans 2 in Schließrichtung 5 und entgegen der Schließrichtung 5, also zwischen den Stellungen gemäß der Fig. 3 und 4, wird im gezeigten Ausführungsbeispiel von einer Antriebseinheit 4 realisiert, welche als pneumatische Kolben-Zylinder-Einheit ausgebildet ist. Sie weist also einen im Zylinder 21 der Antriebseinheit 4 verschiebbar gelagerten Kolben 22 auf. Am Kolben 22 befindet sich in der Antriebseinheit 4 eine Kolbenstange 23, welche mit der Gegendruckplatte 24 verbunden ist. Zur Abstützung der Antriebseinheit 4 auf der zum Verschlussorgan 2 entgegengesetzten Seite wird die Gegendruckplatte 24 beim Andrücken des Verschlussorgans 2 an den Ventilsitz 3 am Gegensitz 27 abgestützt.

Zum Hin- und Herbewegen des Verschlussorgans 2 samt Antriebseinheit 4 in Richtung 16 und in der dazu entgegengesetzt gerichteten Richtung zwischen der Öffnungsstellung gemäß Fig. 2 und der abgehobenen Stellung gemäß Fig. 3 ist in diesem Ausführungsbeispiel eine zweite Antriebseinheit 17 vorgesehen. Diese ist hier ebenfalls als pneumatische Kolben-Zylinder-Einheit ausgebildet. Sie weist einen im Zylinder 21 geführten Kolben 22 auf, an dessen Kolbenstange 23 die Antriebseinheit 4 samt Verschlussorgan 2 befestigt ist. Insgesamt kann das Verschlussorgan 2 also entlang einer L-förmigen Bewegungsbahn bewegt werden. Beim hier gezeigten Ausführungsbeispiel eines erfindungsgemäßen Ventils 1 handelt es sich also um eine Ausführungsform eines sogenannten L-Ventils. Wie eingangs bereits erläutert, ist die Erfindung aber natürlich nicht auf solche L-Ventile beschränkt.

In diesem Ausführungsbeispiel sind beide Antriebseinheiten 4 und 17 als pneumatische Kolben-Zylinder-Einheiten ausgebildet. In diesem Zusammenhang wird darauf hingewiesen, dass dies nicht so sein muss. Im Rahmen der Erfindung können auch ganz anders geartete Antriebseinheiten, z.B. hydraulische, elektrische und/oder mechanische Antriebseinheiten, wie sie z.B. in der CH 659 512 gezeigt sind, eingesetzt werden.

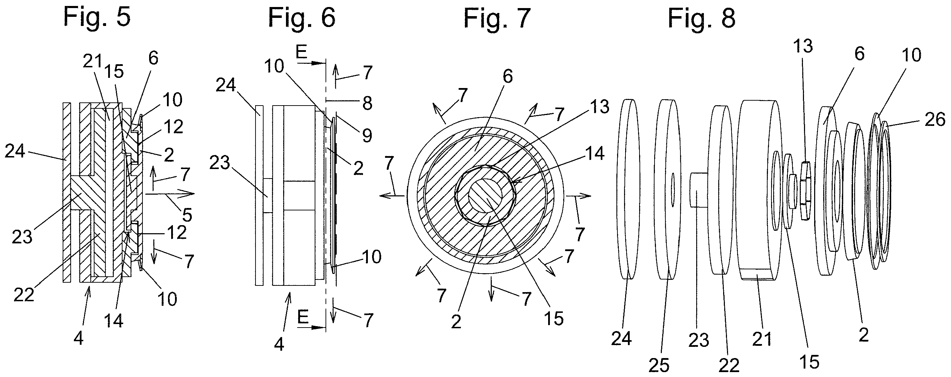

Um beim Andrücken an den Ventilsitz 3 optimal an diesem ausgerichtet werden zu können, ist das Verschlussorgan 2 in diesem Ausführungsbeispiel erfindungsgemäß in zumindest einer Richtung 7 orthogonal oder quer zur Schließrichtung 5 verschiebbar gelagert. In der gezeigten Variante ist die Richtung 7 orthogonal zur Schließrichtung 5 ausgerichtet. Die Verschiebbarkeit ist so ausgebildet, dass sich das hier als Ventilteller ausgebildete Verschlussorgan 2 ausgehend von der Neutralstellung in allen Richtungen 7 radial, also in einer Ebene 8 orthogonal zur Schließrichtung 5 verschieben lässt. Die Schließrichtung 5 bildet eine Flächennormale auf die in Fig. 6 eingezeichnete Schließebene 9 des Ventiltellers.

Zur Realisierung der verschiebbaren Lagerung des Verschlussorgans 2 am Trägerkörper 6 der Antriebseinheit 4 ist in diesem Ausführungsbeispiel vorgesehen, dass der Trägerkörper 6 der Antriebseinheit 4 zumindest einen Aufnahmeraum 14 aufweist und das Verschlussorgan 2 ein mit Spiel in diesem Aufnahmeraum 14 gelagertes Lagerelement 15 aufweist. Dies ist besonders gut in dem Längsschnitt durch das Verschlussorgan 2 und die Antriebseinheit 4 in Fig. 5 zu sehen. Sowohl Aufnahmeraum 14 als auch Lagerelement 15 sind hier, in einem Längsschnitt parallel zur Schließrichtung 5 gesehen, T-förmig ausgebildet. Auch dies ist gut in den Fig. 2-4 und 5 zu sehen. Um die Reibungskräfte niedrig zu halten, ist zwischen dem Verschlussorgan 2 und dem Trägerkörper 6 ein Gleitlager 12 ausgebildet,

Wie eingangs bereits erläutert, sehen bevorzugte Varianten der Erfindung vor, dass das Verschlussorgan 2 und/oder der Ventilsitz 3 und/oder zumindest eine in der Schließstellung zwischen dem Verschlussorgan 2 und dem Ventilsitz 3 angeordnete Dichtung 10 zur Ausrichtung des Verschlussorgans 2 beim Andrücken an den Ventilsitz 3 eine sich in Schließrichtung 5 verjüngende Querschnittsfläche 11 aufweist bzw. aufweisen. Im hier gezeigten Ausführungsbeispiel ist hierzu der Ventilsitz 3 konisch ausgebildet, wie dies besonders gut in den Fig. 2 bis 4 zu sehen ist. Auch bei der konischen Ausbildung verjüngt sich die Querschnittsfläche 11 des Ventilsitzes 3 in Schließrichtung 5. Derselbe Effekt kann aber auch erzielt werden, wenn man die hier am Verschlussorgan 2 angeordnete Dichtung 10 oder das Verschlussorgan 2 selbst entsprechend konisch bzw. mit einer sich in Schließrichtung 5 verjüngenden Querschnittsfläche 11 ausbildet. Der Vollständigkeit halber wird darauf hingewiesen, dass die Dichtung 10 anstelle am Verschlussorgan 2 natürlich auch am Ventilsitz 3 fixiert sein könnte.

Um das Verschlussorgan 2 relativ zum Trägerkörper 6 der Antriebseinheit 4 in einer Neutrallage zu halten bzw. in diese zu bringen, wenn das Verschlussorgan 2 vom Ventilsitz 3 abgehoben wird bzw. ist, ist im gezeigten Ausführungsbeispiel gemäß der Erfindung eine Vorspannfeder 13 vorgesehen. Diese ist besonders gut in den Fig. 7 und 8 zu sehen. Sie ist hier als eine sternförmig umlaufende Feder ausgebildet, welche im hier ringförmigen Aufnahmeraum 14 zwischen dem Trägerkörper 6 und dem Verschlussorgan 2 bzw. dessen Lagerelement 15 angeordnet ist. Der ringförmige Freiraum ermöglicht eine Verschiebung des Verschlussorgans 2 relativ zum Trägerkörper 6 beim Andrücken an den Ventilsitz 3 in allen Richtungen 7 in der Ebene 8 orthogonal zur Schließrichtung 5. Die Vorspannfeder 13 sorgt dann entsprechend beim Abheben des Verschlussorgans 2 vom Ventilsitz 3 wieder für eine entsprechende Rückstellung aus allen diesen Richtungen in die in Fig. 7 gezeigte Neutrallage.

In Fig. 8 sind noch die verschiedenen Bauteile der Antriebseinheit 4 und des Verschlussorgans 2 in einer Explosionsdarstellung gezeigt. Im hier realisierten Ausführungsbeispiel ist ein Stützring 26 vorgesehen, welcher die konisch ausgeformte Dichtung am Verschlussorgan 2 fixiert. Um den Kolben 22 samt Kolbenstange 23 außerhalb des Zylinders 21 in dieser Explosionsdarstellung zeigen zu können, ist die Zylinderrückwand 25 vom Zylinder 21 abgehoben dargestellt.

### Legende zu den Hinweisziffern:

- 1: Ventil
- 2: Verschlussorgan
- 3: Ventilsitz
- 4: Antriebseinheit
- 5: Schließrichtung
- 6: Trägerkörper
- 7: Richtung
- 8: Ebene
- 9: Schließebene
- 10: Dichtung
- 11: Querschnittsfläche
- 12: Gleitlager
- 13: Vorspannfeder
- 14: Aufnahmeraum
- 15: Lagerelement
- 16: Richtung
- 17: zweite Antriebseinheit
- 18: Ventilöffnung
- 19: Flansch
- 20: Gehäuse
- 21: Zylinder
- 22: Kolben
- 23: Kolbenstange
- 24: Gegendruckplatte
- 25: Zylinderrückwand
- 26: Stützring
- 27: Gegensitz

## Patentansprüche

1. Ventil (1), vorzugsweise Vakuumventil, mit zumindest einem Verschlussorgan (2) und zumindest einem Ventilsitz (3) und mit zumindest einer Antriebseinheit (4), wobei das Verschlussorgan (2) in einer Schließstellung an den Ventilsitz (3) angedrückt ist und in einer abgehobenen Stellung vom Ventilsitz (3) abgehoben ist und von der Antriebseinheit (4) in einer, insbesondere linearen, Schließrichtung (5) von der abgehobenen Stellung in die Schließstellung bewegbar ist, wobei das Verschlussorgan (2) zur Ausrichtung des Verschlussorgans (2) beim Andrücken an den Ventilsitz (3) an einem Trägerkörper (6) der Antriebseinheit (4) in zumindest einer Richtung (7) orthogonal oder quer zur Schließrichtung (5) verschiebbar gelagert ist und wobei das Ventil (2) eine Vorspannfeder (13) zum elastischen Vorspannen des Verschlussorgans (2) in Richtung hin zu einer Neutrallage relativ zum Trägerkörper (6) der Antriebseinheit (4) aufweist, **dadurch gekennzeichnet, dass** die Vorspannfeder (13) als eine sternförmig umlaufende Feder ausgebildet ist, welche in einem ringförmigen Aufnahmeraum (14) zwischen dem Trägerkörper (6) und dem Verschlussorgan (2) angeordnet ist.

2. Ventil (1) nach Anspruch 1, **dadurch gekennzeichnet, dass** das Verschlussorgan (2) zur Ausrichtung des Verschlussorgans (2) beim Andrücken an den Ventilsitz (3) an dem Trägerkörper (6) der Antriebseinheit (4) in einer Ebene (8) orthogonal oder quer zur Schließrichtung (5) in allen Richtungen (7) verschiebbar gelagert ist.

3. Ventil (1) nach Anspruch 1 oder 2, **dadurch gekennzeichnet, dass** das Verschlussorgan (2) ein Ventilteller ist.

4. Ventil (1) nach Anspruch 3, **dadurch gekennzeichnet, dass** die Schließrichtung (5) eine Flächennormale auf eine Schließebene (9) des Ventiltellers bildet.

5. Ventil (1) nach einem der Ansprüche 1 bis 4, **dadurch gekennzeichnet, dass** das Verschlussorgan (2) und/oder der Ventilsitz (3) und/oder zumindest eine in der Schließstellung zwischen dem Verschlussorgan (2) und dem Ventilsitz (3) angeordnete Dichtung (10) zur Ausrichtung des Verschlussorgans (2) beim Andrücken an den Ventilsitz (3) eine sich in Schließrichtung (5) verjüngende Querschnittsfläche (11) aufweist bzw. aufweisen, vorzugsweise konisch ausgebildet ist bzw. sind.

6. Ventil (1) nach einem der Ansprüche 1 bis 5, **dadurch gekennzeichnet, dass** das Verschlussorgan (2) unter Zwischenschaltung zumindest eines Gleitlagers (12) am Trägerkörper (6) der Antriebseinheit (4) verschiebbar gelagert ist.

7. Ventil (1) nach einem der Ansprüche 1 bis 6, **dadurch gekennzeichnet, dass** der ringförmige Aufnahmeraum (14) zwischen dem Trägerkörper (6) und einem Lagerelement (15) des Verschlussorgans (2) angeordnet ist.

8. Ventil (1) nach einem der Ansprüche 1 bis 7, **dadurch gekennzeichnet, dass** das Verschlussorgan (2) ausgehend von der abgehobenen Stellung in einer zur Schließrichtung (5) abgewinkelten, vorzugsweise orthogonalen, Richtung (16), vorzugsweise von zumindest einer zweiten Antriebseinheit (17), in eine Öffnungsstellung bewegbar ist, wobei das Verschlussorgan (2) in der Öffnungsstellung ganz oder zumindest teilweise außer Deckung mit einer vom Ventilsitz (3) umgebenen Ventilöffnung (18) gebracht ist.

## Claims

1. A valve (1), preferably a vacuum valve, having at least one shut-off member (2) and at least one valve seat (3) and having at least one drive unit (4), wherein the shut-off member (2) is pressed against the valve seat (3) in a closing position and is lifted off from the valve seat (3) in a raised position and is movable by the drive unit (4) in a, in particular linear, closing direction (5) from the raised position into the closing position, wherein the shut-off member (2) is mounted on a carrier body (6) of the drive unit (4) so as to be displaceable, orthogonally or transversely to the closing direction (5) in at least one direction (7), for alignment of the shut-off member (2) upon pressing against the valve seat (3) and wherein the valve (2) has a preloading spring (13) for the elastic preloading of the shut-off member (2) towards a neutral position relative to the carrier body (6) of the drive unit (4), **characterised in that** the preloading spring (13) is in the form of a stellately encircling spring arranged in an annular receiving space (14) between the carrier body (6) and the shut-off member (2).

2. A valve (1) according to claim 1, **characterised in that** for alignment of the shut-off member (2) upon pressing against the valve seat (3), the shut-off member (2) is mounted on the carrier body (6) of the drive unit (4) so as to be displaceable orthogonally or transversely to the closing direction (5) in all directions in a plane (8).

3. A valve (1) according to claim 1 or 2, **characterised in that** the shut-off member (2) is a valve disk.

4. A valve (1) according to claim 3, **characterised in that** the closing direction (5) forms a surface normal on a closing plane (9) of the valve disk.

5. A valve (1) according to any one of claims 1 to 4, **characterised in that** the shut-off member (2) and/or the valve seat (3) and/or at least one seal (10), arranged between the shut-off member (2) and the valve seat (3) in the closing position, has/have a cross-sectional surface (11) tapering in a closing direction (5), preferably is/are conical, for alignment of the shut-off member (2) upon pressing against the valve seat (3).

6. A valve (1) according to any one of claims 1 to 5, **characterised in that** the shut-off member (2) is displaceably mounted on the carrier body (6) of the drive unit (4) accompanied by interpositioning of at least one sliding bearing (12).

7. A valve (1) according to any one of claims 1 to 6, **characterised in that** the annular receiving space (14) is arranged between the carrier body (6) and a bearing element (15) of the shut-off member (2).

8. A valve (1) according to any one of claims 1 to 7, **characterised in that** starting from the raised position, the shut-off member (2) is movable into an opening position, preferably by at least one second drive unit (17), in a direction (16) angled, preferably orthogonal, with regard to the closing direction (5), wherein the shut-off member (2) is in the opening position brought totally or at least partially out of overlap with a valve opening (18) surrounded by the valve seat (3).

## Revendications

1. Vanne (1), de préférence vanne à dépression, comportant au moins un organe de fermeture (2) et au moins un siège de vanne (3) et au moins une unité d'entraînement (4), l'organe de fermeture (2) étant pressé contre le siège de vanne (3) dans une position fermée et étant soulevé du siège de vanne (3) dans une position relevée, et l'organe de fermeture pouvant être déplacé par l'unité d'entraînement (4) dans une direction de fermeture (5), notamment linéaire, de la position relevée à la position fermée, l'organe de fermeture (2) étant monté sur un corps support (6) de l'unité d'entraînement (4) de manière à pouvoir être déplacé dans au moins une direction (7) orthogonale ou transversale à la direction de fermeture (5) afin d'aligner l'organe de fermeture (2) quand il est appuyé contre le siège de vanne (3), et la vanne (2) étant munie d'un ressort de précontrainte (13) pour précontraindre élastiquement l'organe de fermeture (2) en direction d'une position neutre par rapport au corps support (6) de l'unité de commande (4), **caractérisée en ce que** le ressort de précontrainte (13) est conçu en tant que ressort au contour en forme d'étoile et est disposé dans un espace de réception (14) de forme annulaire situé entre le corps support (6) et l'organe de fermeture (2).

2. Vanne (1) selon la revendication 1, **caractérisée en ce que** pour aligner l'organe de fermeture (2) quand il est appuyé contre le siège de vanne (3), l'organe de fermeture (2) est logé mobile dans toutes les directions (7) sur le corps support (6) de l'unité de commande (4) dans un plan (8) orthogonal ou transversal à la direction de fermeture (5).

3. Vanne (1) selon la revendication 1 ou 2, **caractérisée en ce que** l'organe de fermeture (2) est un disque de vanne.

4. Vanne (1) selon la revendication 3, **caractérisée en ce que** la direction de fermeture (5) forme une normale de surface sur un plan de fermeture (9) du disque de vanne.

5. Vanne (1) selon l'une des revendications 1 à 4, **caractérisée en ce que** l'organe de fermeture (2) et/ou le siège de vanne (3) et/ou au moins un joint (10) disposé en position fermée entre l'organe de fermeture (2) et le siège de vanne (3) présente ou présentent une section transversale (11) qui se rétrécie dans la direction de fermeture (5), et est ou sont de préférence conique(s), afin d'aligner l'organe de fermeture (2) quand il est appuyé contre le siège de vanne (3).

6. Vanne (1) selon l'une des revendications 1 à 5, **caractérisée en ce que** l'organe de fermeture (2) est monté mobile sur le corps support (6) de l'unité d'entraînement (4) avec interposition d'au moins un palier lisse (12).

7. Vanne (1) selon l'une des revendications 1 à 6, **caractérisée en ce que** l'espace de réception (14) de forme annulaire est disposé entre l'organe support (6) et un élément de palier (15) de l'organe de fermeture (2).

8. Vanne (1) selon l'une des revendications 1 à 7, **caractérisée en ce que** l'organe de fermeture (2) peut être déplacé depuis la position relevée à une position ouverte dans une direction inclinée par rapport à la direction de fermeture, de préférence orthogonale (16) à celle-ci, de préférence par au moins une deuxième unité d'entraînement (17), l'organe de fermeture (2), en position ouverte, étant amené complètement ou au moins partiellement hors recouvrement d'une ouverture de vanne (18) entourée du siège de vanne (3).
